# EUROPEAN PATENT SPECIFICATION

(11) **EP 1 407 259 B1**
(45) Date of publication and mention of the grant of the patent: **10.03.2010**
(21) Application number: 02745619.3
(22) Date of filing: 15.07.2002
(51) Int. Cl.: G01N 31/12, G21F 9/00, B01D 59/00

(54) **ANALYTICAL TECHNIQUE**
ANALYSETECHNIK
TECHNIQUE ANALYTIQUE

(30) Priority: 17.07.2001 GB 0117352
(43) Date of publication of application: 14.04.2004
(73) Proprietor: Nuclear Decommissioning Authority, Cumbria CA24 3HU (GB)
(72) Inventor: GOODALL, Phillip, Stephen, Cumbria CA20 1PG (GB); LEE, Andrew, G. British Nuclear Fuels Plc, Cumbria CA20 1PG (GB)
(74) Representative: Chalk, Anthony John
(86) International application number: PCT/GB2002/003214
(87) International publication number: WO 2003/008960

(56) References cited:
- EP-A- 0 603 708
- US-A- 3 811 838
- US-A- 3 830 628
- US-A- 5 489 737
- US-A- 5 550 311

## Description

This invention relates to a novel analytical technique.

In particular the present invention relates to a technique for the analysis of materials, that include, but are not limited to, highly radioactive substances of interest in the nuclear fuel cycle. This analytical process has the purpose of determining radionuclides including, but not limited to, C-14, I-129, C1-36, Tc-99, Ru-106 and S-35.

The primary feature of the present invention is the removal of any uncertainty from the determination generated by the chemical or physical form of the analytes of interest, *i*.*e*., the true total specific radionuclide content is determined.

With particular reference to iodine-129 and carbon-14:

### Iodine-129

A semi-routine analytical method exists for the determination of total I-129 in spent fuel solutions. There is some ambiguity in the measurement and it is believed that only soluble, inorganic forms of I-129 are detected and quantified by this method of analysis. The procedure involves a two-stage preparation, in a heavily shielded facility, using precipitation and ion exchange to remove extraneous radionuclides. This crude fraction may then be exported to a comparatively low level protection environment, such as a fume-hood or a radio-bench, for further purification before determination of the I-129 content by low energy photon spectroscopy (LEPS).

In addition, a variety of standard literature methods have been used to determine total and speciated forms of iodine in radioactive materials. These procedures do not yield information as to the isotopic form of the analyte of interest. For example:
- Total iodine after reduction to I⁻ with ascorbic acid followed by ion selective electrode (ISE) potentiometry.
- Iodine speciation by the determination of iodide by DC polarography, iodate by differential pulse polarography and solvated iodine by spectrophotometry. The total chemical iodine was determined, after reduction to iodide, by ISE or polarography.

### Carbon-14

There are no methods available currently available for the determination of C-14 in highly radioactive samples. A method for the determination of C-14 in intermediate level waste forms (Ba(CO₃) slurries) has been developed. This method determines C-14 present as carbonate but would not necessarily detect C-14 present in other chemical forms. In outline, the Ba(CO₃) slurry is treated with dilute mineral acid, the evolved CO₂ washed and absorbed in aqueous sodium hydroxide with subsequent radiometric counting of the solution.

In general, the precision obtained using classical radiometric techniques for the determination of residual radionuclides of interest in highly active materials preclude a precise determination. Thus, we have found that it may be highly desirable to utilise the advantages of advanced mass spectrometry.

US Patent No. 5,438,194 - Koudijs et al. describes a method of detecting radioisotope molecules which comprises the steps of:
(i) separating molecules by use of a chromatographic column;
(ii) coupling the column output to an ion source system which produces negative ions;
(iii) directing the negative ions into a tandem accelerator mass spectrometer to form high velocity positive ions; and
(iv) stopping the positive ions in a particle detector.

This is not a viable option with highly active materials as it is not practical to couple these materials to an extremely expensive mass spectrometer via a chromatographic interface. This system provides information that differs fundamentally from that provided by our approach, i.e., the radionuclide content of specific volatile or semi-volatile chemical compounds within a given sample is determined. In contrast, our system determines the total radionuclide of interest in a material irrespective of the chemical or physical form of that radionuclide.

We have now found an improved method for the determination of radionuclides, which overcomes or mitigates the disadvantages of prior art approaches.

US Patent No 3,830,628 discloses a method and apparatus for the processing of fluid materials, particularly for the preparation of samples for radioactive tracer studies by combustion of starting materials containing such isotope tracers. However, the patent does not mention the subsequent analysis of the derived analytes and, furthermore, the disclosed technique relies on the oxidation of necessarily organic substrates and, consequently, provides no significant separation of the components. The method of the present invention, however, utilises pyrolysis and pyrohydrolysis of the starting materials, thereby reducing the materials in order promote volatilisation, with resulting separation of the components from a largely inorganic, and hence incombustible, substrate.

US Patent No 3,811,838 teaches a method and apparatus for the processing of fluid materials, particularly for the preparation of samples for radioactive isotope tracer studies by combustion of starting materials containing such isotope tracers. Again, however, the method relies on simple combustion techniques in a combustion chamber, rather than the pyrolysis and pyrohydrolysis techniques of the method of the present invention and, in addition, the patent fails to mention the use of a carrier, which facilitates the analysis of minute amounts of radioactive material according to the method of the present invention. Thus according to the invention we provide a method for the determination of an analyte consisting of specified radionuclides which comprises the steps of:
(i) addition of a combined carrier and tracer to a sample to be analysed;
(ii) mineralisation of the sample with the added combined carrier and tracer;
(iii) isolation of the analyte from the result of said mineralisation; and
(iv) determination of the analyte,
**characterised in that** the step of mineralisation of the combined carrier and tracer sample comprises pyrolysis and/or pyrohydrolysis.

Preferentially, the step of pyrolysis and/or pyrohydrolysis will be followed by subsequent absorption and/or adsorption of evolved gasses and vapours into or onto a substrate.

The method of the invention extends and validates a sample preparation methodology, based upon pyrohydrolysis, for the determination of radionuclides of interest. This analysis may be, but is not necessarily limited to, highly radioactive materials.

The pyrohydrolysis has the following features:
- Converts all chemical and physical forms of the analytes of interest into soluble, inorganic forms.
- Provides an efficient matrix removal.
- Has been proven to work as a routine method under restrictive engineering controls.

The step of isolating the desired analyte from the substrate may also include a further step of purification of the analyte. The isolation and/or purification step may subsequently include the step of preparing a source for measurement of the analyte of interest. Such analysis may itself comprise:
(i) determination of analytes of interest by classical radiometric techniques, or
(ii) determination of analytes of interest by inorganic mass spectrometry, e.g., accelerator mass spectrometry and/or inductively coupled plasma mass spectrometry.

The invention will now be described, by way of embodiments, with reference to the accompanying drawings in which:
Figure 1a is a schematic representation of a flow sheet for an initial pyrohydrolysis performed in a heavily shielded remote facility.
Figure 1b is a schematic representation of a flow sheet for a large scale dilution, calibrated by isotope dilution techniques, performed in a heavily shielded remote facility;
Figure 1c is a schematic representation of a flow sheet for a hybrid approach.
Figures 2 to 4 are schematic representations of apparatus suitable for carrying out the method of the invention; and
Figure 5 is a temperature profile for the operation of pyrohydrolysis apparatus inside a hot cell.

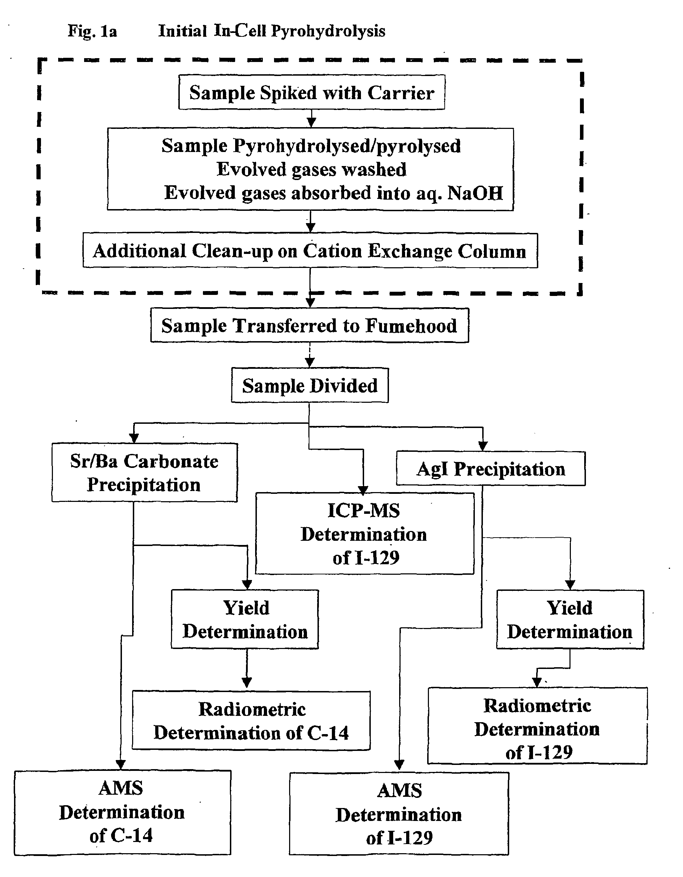

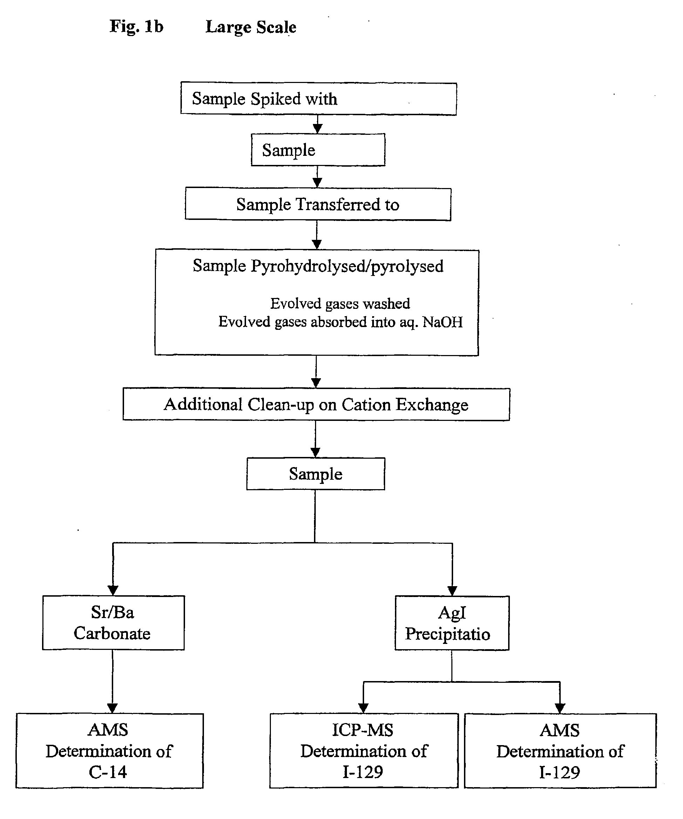

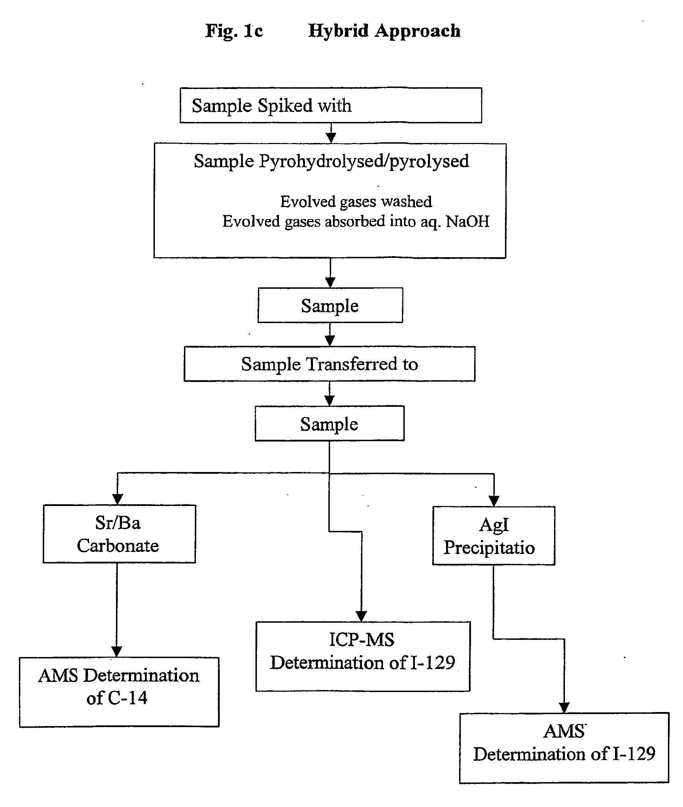

An analytical process based upon pyrohydrolysis offers the possibility of determining both C-14 and I-129 on a single sample aliquot. Three approaches are proposed for the determination of I-129 and C-14.
a) A remote pyrohydrolysis in a highly shielded facility and, if required, additional sample purification in that facility prior to export of the processed sample to a comparatively low level protection environment for subsequent processing (Fig la).
b) A large dilution of the sample, calibrated using isotope dilution methodologies, in a highly shielded facility prior to export to a comparatively low level protection environment for pyrohydrolysis and subsequent processing (Fig 1b).
c) A hybrid approach including, a pyrohydrolysis and calibrated dilution in a highly shielded facility, with export to a comparatively low level protection environment for with subsequent sample preparation (Fig 1c).

A radio-bench offers a suitable comparatively low level protection environment in each case.

The large dilution approach is attractive in terms of minimising remote manipulations in the highly shielded facility. This assumes that solids are present either as a colloid or stable suspension and can be sampled and diluted representatively. The hybrid methodology minimises any potential errors due to sampling of very dilute suspensions by homogenising the sample prior to dilution whilst minimising subsequent manipulations.

The process is further advantageous and has the following features:
- The sample preparation is robust, aggressive, efficient and therefore tolerant of a wide range of sample matrixes.
- The sample preparation effects a complete separation of the analytes of interest from the matrix and consequently reduces the interference of matrix species on the final determination.
- The sample preparation and subsequent production of a source can be tailored to either a classical radiometric or mass spectrometric determination of the analytes of interest.
- Other potentially volatile radionuclides may be amenable to determination via this approach, e.g., S-35, C1-36, Tc-99 and Ru-106.

These features suggest that:

This basic methodology could evolve into a general approach for the determination of C-14 and I-129 in a wide variety of sample types, e.g.,
- Process streams of concern in the nuclear fuel cycle ranging in activity between highly active and essentially non-radioactive, e.g., spent fuel solutions. These process streams may be solids, liquids or gases.
- Process waste streams of concern in the nuclear fuel cycle ranging in activity between highly active and essentially non-radioactive, e.g.:

- These process streams may be solids, liquids or gases.
- Process waste forms of concern in the nuclear fuel cycle ranging in activity between highly active and essentially non-radioactive. These process waste forms are normally solids, e.g., vitrified high level wastes and cementated intermediate level waste.
- Materials originating from the environment and/or which are of environmental concern, e.g. as part of an environmental study or survey:-
   - fish
   - milk
   - grass
   - etc.

The basic aims of this methodology could be extended to the determination of other volatile radionuclides in a similar broad spectrum of sample matrices.

### EXAMPLES

Detailed embodiments of the invention will now be described by way of examples only.

The presence of ¹²⁹I poses a significant challenge in the reprocessing of nuclear fuel. Unlike ¹³¹I, ¹²⁹I has a very long half-life of 1.57x10⁷ y, undergoing β-decay to the meta-stable isotope ^{129m}Xe. Due to the volatile nature of iodine and many of its compounds, secure and indefinite containment is difficult. Although ¹²⁹I has a low specific activity of 6.531x10⁶ Bqg⁻¹, its radiotoxicity is magnified as it is taken readily into the food chain and the human body accumulates iodine in the thyroid gland. Similarly, ¹⁴C is also a problem due to its volatility as ¹⁴CO₂ which may easily be released from barium carbonate slurries.

Previous studies have shown that the amount of iodine remaining after sparging in the dissolver liquors of the THORP reprocessing method is <2% of the original inventory. However, there is some ambiguity as to whether the total or soluble ¹²⁹I is measured. This ambiguity could be resolved by a sample treatment aimed at producing soluble iodine species.

### Pyrohydrolysis

Pyrohydrolysis involves heating (typically 500-1000°C) solid/liquid samples in a stream of moist air/oxygen/nitrogen and absorption of the evolved gases into a trapping solution. As the iodine containing species (I₂, I⁻) are trapped simultaneously in aqueous solution this method offers a more accurate value of the total iodine content of the high activity (HA) liquors.

**An example of a typical reaction is** 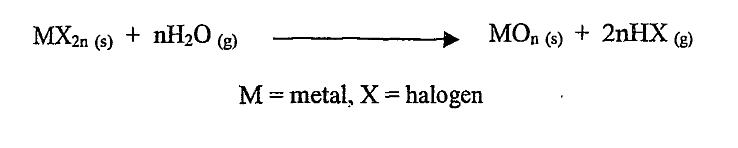 The gas stream of N₂, O₂, air etc is applied to wash the evolved HX into the trap solution. Once the volatile halogen containing species are trapped in solution, the total halogen content can be determined by a number of methods including ion-selective electrodes (ISE), ion chromatography (IC), spectrophotometry, XRF spectrometry, radiochemical neutron activation analysis (RNAA) and more recently inductively coupled plasma mass spectrometry (ICP-MS). A typical procedure involves pyrohydrolys is of 10-100mg of the iodine containing species and trapping the evolved gases in 50ml of 1M NaOH solution. The solution is then neutralised by the addition of 1M HCl and ascorbic acid added to reduce all iodine species to iodide which can then be measured using an iodide electrode (ISE).

As the pyrohydrolysis technique results in oxidation of the matrix material, it can also be applied to carbon containing species, CO₂ being the evolved product. CO₂ is also, conveniently, trapped in aqueous NaOH. Hence pyrohydrolysis offers the possibility of determining both ¹⁴C and ¹²⁹I from a single sample aliquot. However, a problem when applying the pyrohydrolysis technique to carbon containing matrices is that the trap solution can be contaminated with atmospheric levels of ¹⁴CO₂ which would lead to an error in the measured ratio of ¹⁴C:¹²C. Very careful handling of the trap solutions is therefore required. The amount of carbon, as CO₃²⁻, in the trap solution can be determined by treatment with barium chloride solution to precipitate barium carbonate and determination of the unreacted NaOH by titration with standard acid to the phenolpthalein end point.

### Carriers

Working with exceedingly small amounts of radioactive materials (iodine and carbon in this case) is facilitated by diluting the radionuclide with isotopic or at least chemically similar material. The added material is referred to as a ***carrier.*** Ordinary inactive sodium, for example, may be added to radiosodium, so that there is perhaps 10⁻²g of material to handle rather than say 10⁻¹⁵g. For many purposes the presence of the sodium carrier is unobjectionable because, being isotopic, its chemistry is virtually identical with that of the radiosodium.

Due to the highly complex nature of the HAL liquors, almost every element of the periodic table is likely to be present in some quantity and the choice of carrier(s) is quite a difficult one. Ideally, the carrier of choice should contain both iodine and carbon. The nature of the HAL liquors (∼10M HNO₃) also needs to be taken into account as many substances may be volatilised under these conditions. With iodine, the matter is simplified as only ¹²⁷I occurs naturally and therefore the contribution to the ¹²⁹I content of the sample is affected. With carbon, however, the matter is slightly more complex due to the presence of naturally occurring ¹⁴C in the atmosphere (it is produced in the upper atmosphere by the action of cosmic rays on ¹⁴N). The carrier for carbon should therefore originate from 'dead carbon'. This is carbon in which all the radioactive ¹⁴C has diminished to zero concentration due to its age, such as that in fossil fuels. Examples are compounds originating from petrochemicals or coal. The carrier should also be water soluble so that it can be manipulated in a hot cell by pipetting into the sample containing crucible and most importantly the carrier should pyrohydrolyse in the same temperature range as the sample of interest. For example, if the carrier pyrohydrolysed at 200°C but the other species in the HAL sample pyrohydrolysed at much higher temperatures then it would not be an effective carrier and the radioactive sample may be lost on the walls of the furnace tube.

**Carriers include:**

| | |
|---|---|
| Inorganic Carbon: | CaCO₃, graphite, WC |
| Organic Carbon: | ⁿBu₄I (TBAI), naphthalene, 1-Iodooctane |
| Inorganic Iodine: | AgI, CsI, KI, CuI, KI₃, KIO₃ |
| Organic Iodine: | TBAI, 1-Iodooctane |

A particularly suitable carrier is a quatenary alkyl ammonium iodide for instance, tetra-butyl ammonium iodide (TBAI). It is a source of both carbon and iodine and is water soluble.

The pyrohydrolysis results for the above-mentioned carriers are shown in Table 1.

**Table 1**

| **Compound** | **Yield** |
|---|---|
| CaCO₃ | 98% |
| Graphite | 97% |
| WC | 98% |
| AgI | 100% |
| CsI | 100% |
| CuI | 100% |
| KI | 98% |
| KIO₃ | 99% |
| KI₃ | 97% |
| TBAI | C - 101%, I - 98% |
| Naphthalene | 97% |
| 1-Iodooctane | C - 99%, I - 99% |

In carrying out pyrohydrolysis with these materials, various factors may need to be controlled in order to give best results, including catalyst temperature, amount of oxygen and temperature ramp rate.

The yields quoted in Table 1 are the average values for five or more reactions. The pyrohydrolysis of CaCO₃, graphite and WC in the early reactions was performed with approximately 50g of 0.5% Pt on " alumina.

The pyrohydrolysis of AgI and CsI benefits from the addition of V₂O₅ accelerator. In the absence of V₂O₅, the result is distillation of these compounds. In the case of CsI, some decomposition to release iodine does take place at high temperature, but with AgI there is no decomposition observed. CuI can be pyrohydrolysed without the addition of V₂O₅ and decomposes readily at ∼ 200-300°C. KI has been investigated and was found to behave in a similar manner to CsI, *i*.*e*. some decomposition is observed at higher temperatures but V₂O₅ is required for a quantitative recovery of iodine. Pyrohydrolysis of KI₃ solution leads to evaporation of iodine at ∼ 100-130°C, leaving a white residue of KI. Again, V₂O₅ is required for complete recovery of iodine. A low iodine recovery for pyrohydrolysis of KIO₃ was encountered in the absence of V₂O₅. After heating the sample to 1000°C and cooling, a white residue of KI remained in the combustion boat. Repeating this reaction with V₂O₅ added resulted in quantitative recovery of iodine.

All the reactions described above were performed with moist air as the carrier gas at a flow rate of 100ml/min.

V₂O₅ has minimal effect in the pyrohydrolysis of TBAI as TBAI evaporates from the boat at low temperature (130°C).

In order to establish the decontamination factors for volatile species containing Cs, Sr and Ru, experiments were conducted involving the pyrohydrolysis of a mixture of CsNO₃, Sr(NO₃)₂ and [Ru(NO)(NO₃)₂(OH)] in dilute nitric acid. The nitric acid was removed by heating to 90°C for 30 minutes. The mixture was then heated to 1000°C in a stream of moist air at 100ml/min and 50g of the Pt catalyst. The resulting trap solution remained colourless at the end of the experiment, indicating little Ru carry over. The amounts of Cs, Sr and Ru in the trap were established by ICP-MS. The decontamination factor (DF) required in order to remove the trap solution from a hot cell into a fume hood is - 2500.

The pyrohydrolysis of the compounds discussed above has demonstrated that their carbon and iodine content can be quantitatively released and trapped in aqueous solution.

### Method

The fundamental conditions required for the pyrohydrolysis of any material introduce a number of variable parameters into the experimental design.

The basic parameters are:
■ Steam
■ Gas flow
■ Identity of gas
■ Temperature
■ Trapping media

Depending upon the type of material under investigation, a number of extra parameters may be required such as:
■ Gas flow rate
■ Rate of temperature increase
■ Oxidation accelerators
■ Trapping efficiency - concentration of solution, gas-liquid contact etc
■ Conversion catalysts - nature, quantity required, temperature of operation etc

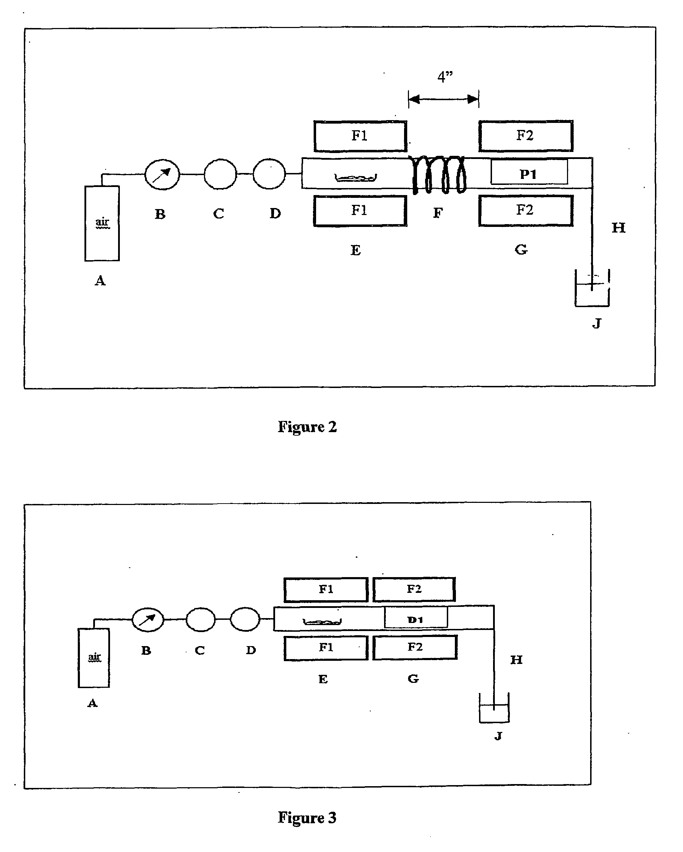

The requirement for carbon, as well as iodine, quantitation has meant that instead of the usual single furnace setup, a second furnace is also necessary. The second furnace oxidises any material (such as CO) released from the first furnace at low temperature. As such, the second furnace is operated at a higher temperature (say 300-1000°C). An experimental setup is illustrated in Figure 2.

This consists of a carrier gas cylinder (A), flowmeter (B), sodium hydroxide trap (C), steam generator (D), two tube furnaces (E&G) , heater tape (F), condenser tube (H) and trap vessel (J). The carrier gas, either N₂, O₂ or air, is passed through a trap solution of saturated NaOH to remove any carbon dioxide. This is bubbled through a 500ml three neck flask containing anti-bumping granules and de-ionised water at 90-100°C. The steam generated is fed through a 28mm two piece quartz furnace tube containing the sample in a quartz boat (∼80mm x 21mmØ). The sample furnace is of the hinged type so that the reaction progress can be monitored. The temperature can be programmed through an eight segment controller to ramp up to a maximum temperature of 1200°C. A second tube furnace of the fixed type has a set temperature so that any volatile species released from the sample in the first furnace at low temperature are pyrolysed fully before being trapped. Each furnace is ∼ 500mm in length and the two tubes are joined by a ball and socket joint, which is heated by an electrical tape heater to minimise condensation between the two furnaces. A fritted tube is fitted to the end of the condenser in order to maximise contact between the evolved gases and the NaOH trap solution. The receiver vessel is a 250ml polypropylene bottle which is open to the atmosphere.

The steam generator required for pyrohydrolysis consists of a 500ml round bottom flask containing anti-bumping granules. This is equipped with a quickfit gas supply inlet, thermometer and outlet to the furnace tube. The temperature is controlled by an electric heater mantle. The temperature of the steam is regulated at 90-100°C.

Condensation in the opening to the furnace tube is prevented by heating this area with a resistive heater tape (not shown in figure).

In the case of metal iodides and iodates steam is required to break open the matrix. However, for carbon containing compounds the presence of steam is not required. Inclusion of steam in these reactions leads to a higher temperature requirement before complete oxidation is achieved. Thus, graphite is oxidised in a stream of dry oxygen at ∼ 500-550°C, whereas in a stream of moist oxygen oxidation does not commence until ∼ 700°C. The presence of steam was found to have no detrimental effect on the efficiency of the Pt catalyst and, in fact, is probably desirable for the oxidation of CO to CO₂.

The design of the trap solution vessel has to be taken into account as the final volume can almost double depending on the time-scale of the experiment. Initially, the trap vessel consisted of a 250ml plastic bottle but this was replaced by a 125ml quickfit Dreschel bottle.

The purpose of the carrier gas is to promote steam generation and to carry any sample evolved gases into the trap solution. A high enough flow rate is required so that any evolved gases cannot diffuse back towards the steam generator and therefore be lost. However, too high a flow rate can lead to a lower trapping efficiency of CO₂. For example, the yield of CO₂ from the combustion of graphite in O₂ gradually diminished as the flow rate was increased. The ideal flow rate is approximately 100ml/min.

The identity of the carrier gas is not important in the pyrohydrolysis of iodine containing compounds as it is the steam that causes reaction and not the carrier gas. Hence, quantitative yields of iodine can be achieved with N₂, O₂ or air as the carrier gas. However, as the conversion of carbon to CO₂ is essentially a combustion reaction, the carrier gas must contain oxygen. As the use of pure O₂ in the pyrohydrolysis of TBAI led to violent reactions with partially oxidised organic material being deposited over the whole length of the furnace tube, and its use inside a hot cell may pose a high risk in the event of a failure, the experimental conditions have been developed so that air can be used instead. All the results in Table 1 were achieved with moist air as the carrier gas.

A possible drawback with the apparatus shown in Figure 2 was that the area between the two furnaces could act as a cold spot. Whereas this did not affect the CO₂ recoveries from inorganic compounds such as graphite, WC and CaCO₃, carbon derived from organic compounds such as TBAI would be lost as it condensed on the cold spot. With graphite, WC and CaCO₃ the high melting points mean that the sample only migrates from the quartz boat as it is oxidised. With organic compounds, such as TBAI, the low melting points lead to evaporation and eventual decomposition on the walls of the furnace tube around the cold spot. As this area could not be heated high enough to oxidise the coating, carbon was lost and this could give rise to low CO₂ recoveries. A modified apparatus is shown in Figure 3. The furnace tube mountings were fabricated so that the two furnaces could be moved closer together (∼ 2mm gap). The furnace tube was also changed from the two piece to a single piece variety. The decomposition of TBAI still led to a black deposit in the region between the two furnaces but this could now be oxidised as the temperature of the sample containing furnace was ramped up, hence the higher CO₂ recoveries.

### Oxidation Accelerators

The pyrohydrolysis of inorganic halides such as CsI, KI and AgI benefit from the addition of an oxidation accelerator such as V₂O₅. Without an accelerator, pyrohydrolysis can result in only partial decomposition and release of iodine in the case of CsI and KI, and no decomposition for AgI. By contrast, CuI was found to readily decompose at low temperature and V₂O₅ was not required.

Other oxidation accelerators include U₃O₈ and WO₃.

### Trapping Solutions

As CO₂, I₂ and HI can all be quantitatively and simultaneously trapped in aqueous NaOH, this was the ideal choice for the trapping solution. Initial investigations on the combustion of graphite with molar equivalents of NaOH in the trap, i.e. 10mmol CO₂ ≡ 20mmol NaOH (CO₂ + 2NaOH → Na₂CO₃ + H₂O), revealed that CO₂ was being lost from the trap. This was determined by fitting a second trap and examining it for CO₂ content. A series of graphite combustion experiments were conducted with 100ml/min O₂ flow and increasing molar equivalents of NaOH in the first trap. These experiments revealed that a two times molar equivalent of NaOH was preferred for 100% CO₂ trapping efficiency, i.e. 10mmol CO₂ requires 40mmol NaOH. The concentration of the NaOH was not found to be important, hence the solutions could be diluted to gain adequate volume. A large excess of NaOH in the trap is undesirable as this could lead to absorption of atmospheric ¹⁴CO₂ in the hot cell work.

The trap solutions from the pyrohydrolysis of compounds containing only carbon (graphite, WC, CaCO₃, naphthalene) were diluted to 250ml and 50ml aliquots were treated with a slight excess of 0.1M BaCl₂ solution to precipitate the absorbed CO₂ as BaCO₃. The unreacted NaOH could then be determined by titration with standard acid to the phenolpthalein endpoint. The recovery of CO₂ could then be calculated from the amount of reacted NaOH.

Trap solutions from the pyrohydrolysis of compounds containing only iodine (AgI, CsI, CuI, KI, KI₃, KIO₃) were neutralised with 1M HCl and treated with ascorbic acid to reduce all iodine species to iodide. The iodide concentrations were then determined with an iodide specific electrode.

Trap solutions from the pyrohydrolysis of compounds containing carbon and iodine (TBAI, 1-iodooctane) were diluted to 250ml. 50ml was taken and treated as described above for iodine analysis. Of the remaining solution, 50ml aliquots were titrated against standard acid and the CO₂ recovery then corrected by subtraction of the iodine content. A first trap contained KI solution to trap iodine and a second trap contained NaOH to trap the CO₂. Iodine and CO₂ recoveries were then calculated from titrations with thiosulphate and standard acid respectively.

### Conversion Catalyst

It is preferred that a catalyst such as platinum (Pt) be used to convert any CO formed to CO₂. Pt also promotes the decomposition of hydrocarbons which is desirable for the reactions with TBAI, naphthalene and 1-iodooctane.

A suitable form of catalyst was 0.5% Pt coated on 1/8" (3.18 mm) alumina pellets. These were packed into the second, high temperature, furnace and provided very good contact with the gas throughput.

The temperature of the Pt catalyst could be maintained anywhere between 300° and 1000°C without effecting its efficiency to oxidise CO to CO₂. It was discovered that the low CO₂ recoveries from the pyrohydrolysis of graphite, CaCO₃ and WC were attributable to the amount of Pt catalyst being employed. This had to be increased from ∼ 20 g (packing length of ∼ 2" (50.8 mm)) to ∼ 50 g (∼5" (127 mm) length) in order to achieve quantitative recoveries of CO₂. Iodine was not found to effect the efficiency of the Pt catalyst.

### General Pyrohydrolysis Procedure

A general procedure for pyrohydrolysis is as follows:

40-1000mg of the compound under investigation and a 2-3 times excess of V₂O₅ were weighed into a quartz boat and placed in the furnace tube at room temperaturewhich was then heated. Moist air was passed through the apparatus at a flow rate of 10ml/min. The evolved gases were passed through a Pt catalyst which was typically maintained at 900°C.

### Preferred Method Features

The method development identified the following conditions as preferred for the pyrohydrolysis of iodine/carbon containing compounds or mixtures of these compounds;
■ Steam supply @ 90-100°C
■ O₂ or air @ 100ml/min flow rate (air is preferred for organics)
■ Temperature profile (especially for organics)
■ In most cases V₂O₅ accelerator is preferred for pyrohydrolysis of metal iodides/iodates
■ Correct quantity of Pt catalyst
■ Two molar equivalents of NaOH for quantitative trapping of CO₂ @ 100ml/min flow rate
■ No cold spots in apparatus

### Options for Hot Cell Operation

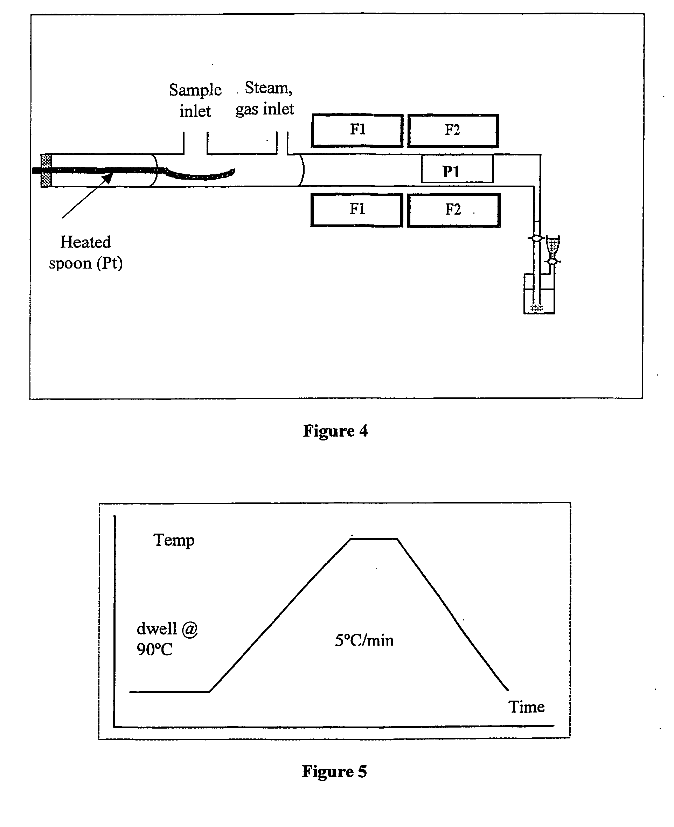

A number of modifications are preferred in order to operate the pyrohydrolysis apparatus inside a hot cell. For instance, the current apparatus is too large to fit inside the hot cell transport bogey. Any apparatus being transported in or out of the hot cell has to fit inside a 255mm∅ x 355mm a metal container. This means that the maximum practical furnace tube length will be approximately 430mm. This is roughly half the current length. The furnace set up either consists of two 150mm long furnaces or a single two zone furnace of 350mm in length. The furnace controllers will be situated outside the hot cell so special mountings will need to be fabricated for the furnace barrels. All the furnace tube joints will probably be ball and sockets, held in place with metal clips. The design of the apparatus should be as simple as possible in order to ease and reduce the number of master/slave manipulations. An experimental set up is illustrated in Figure 4. The heated spoon configuration suggested here allows simplified sample loading and reduces manipulations to a basic sliding operation. The resistive heating allows the nitric acid solvent to be evaporated before the sample is slid into position within the furnace.

The sample consists of ∼ 1ml of dissolver liquor, which is ∼10M in HNO₃. This can loaded into the heated spoon by pipetting through the opening shown in Figure 4. As V₂O₅ accelerator is preferred for the pyrohydrolysis of metal iodides and iodates. As V₂O₅ is a free flowing solid, this may be added by tipping a pre-weighed excess from a small vial. A calibrated amount of TBAI carrier (∼50mg) in aqueous solution could then be added, again by pipette. Loading the spoon in this order minimises volatilisation of iodine from the TBAI carrier as the nitric acid would be neutralised by the V₂O_{5.} Another approach would be to heat the spoon to evaporate the nitric acid before adding the V₂O₅ and carrier.

The temperature profile for the hot cell experiments may resemble that displayed in Figure 5. An initial dwell period at approximately 90°C is preferred in order to evaporate the solvent. After evaporation to dryness, the spoon is moved into the furnace and a slow temperature ramp started (∼5°C/min up to 1000°C). The heating cycle lasts for approximately 4 hours.

Once the trap solution containing the ¹⁴C and ¹²⁹I has been suitably decontaminated, it will be split and treated with BaCl₂ and AgNO₃ solutions to precipitate BaCO₃ and AgI respectively. Further decontamination may then be required so that these samples can be shipped off site for AMS (accelerator mass spectrometry) measurement of the ¹⁴C:¹²C and ¹²⁹I:¹²⁷I ratios. The BaCO₃ can be purified by treatment with acid and re-absorption of the released CO₂ into NaOH. Another approach is to cryogenically trap the CO₂ and then reduce it to carbon by reaction with H₂ over a heated Fe catalyst.

## Claims

1. A method for the determination of an analyte consisting of a specified radionuclides, which comprises the steps of:
(i) addition of a combined carrier and tracer to a sample to be analysed;
(ii) mineralisation of the sample with the added combined carrier and tracer;
(iii) isolation of the analyte from the result of said mineralisation; and
(iv) determination of the analyte,
**characterised in that** step (ii) comprises the pyrolysis and/or pyrohydrolysis of the sample.

2. A method according to Claim 1 **characterised in that** step (ii) comprises the pyrohydrolysis of the sample.

3. A method according to Claim 1 or 2 **characterised in that** step (ii) includes, subsequent to the mineralisation of the sample, the absorption and/or adsorption of evolved gases and vapours onto or into a substrate.

4. A method according to Claim 1, 2 or 3 **characterised in that** step (iii) includes a further step of purification of the analyte.

5. A method according to any one of Claims 1 to 4 **characterised in that** step (iv) comprises either:
(i) determination of analytes of interest by classical radiometric techniques, or
(ii) determination of analytes of interest by inorganic mass spectrometry

6. A method according to any preceding Claim **characterised in that** the analyte is selected from one or more of C-14, I-129, Cl-36, Tc-99, S-3 5 and Ru-106.

7. A method according to Claim 5 **characterised in that** step (iv) comprises determination of analytes of interest by inorganic mass spectrometry.

8. A method according to Claim 7 **characterised in that** the inorganic mass spectrometry is inductively coupled plasma mass spectrometry.

9. A method according to Claim 8 **characterised in that** the analyte is I-129 or Tc-99.

10. A method according to Claim 7 **characterised in that** the inorganic mass spectrometry is accelerator mass spectrometry.

11. A method according to Claim 10 **characterised in that** the analyte is I-129, C-14, Tc-99 or Cl-36.

12. A method according to Claim 5 **characterised in that** step (iv) comprises determination of analytes of interest by classical radiometric techniques.

13. A method according to Claim 12 **characterised in that** the analyte is I-129, C-14, Tc-99, S-35, Ru-106 or C1-36.

14. A method according to Claim 2 or 3 **characterised in that** the pyrohydrolysis is adapted to convert all chemical and physical forms of the analyte into soluble, inorganic forms.

15. A method according to Claim 2 or 3 **characterised in that** the analysis is based upon pyrohydrolysis of both C-14 and I-129 in a single sample aliquot.

16. A method according to Claim 2 **characterised in that** step (ii) comprises a remote pyrohydrolysis of the sample in a heavily shielded facility.

17. A method according to Claim 16 **characterised in that** the determination additionally comprises additional sample processing in the heavily shielded facility to allow export to a radio-bench.

18. A method according to Claim 16 **characterised in that** further purification of the sample and preparation of the source is performed at a radio-bench.

19. A method according to Claim 2 **characterised in that** the determination of I-129 and C-14 comprises a large dilution of the sample in a heavily shielded facility.

20. A method according to Claim 19 **characterised in that** the dilution is calibrated using isotope dilution methodologies.

21. A method according to Claim 19 wherein the step of isolation of the analyte includes a further step of purification of the analyte, and said isolation and purification step subsequently also includes the step of preparing a source for measurement of the analyte, **characterised in that** pyrohydrolysis, sample purification and source preparation are performed in a comparatively low-level protection environment.

22. A method according to Claim 2 **characterised in that** the determination is based upon a hybrid approach including, a remote pyrohydrolysis and a calibrated dilution in a heavily shielded facility and subsequent sample purification and source preparation in a comparatively low-level protection environment.

23. A method according to Claim 1 **characterised in that** the material to be analysed is based on; process streams or materials, process wastes and waste forms of interest in the nuclear fuel cycle.

24. A method according to Claim 23 **characterised in that** the material may range highly radioactive to essentially non-radioactive.

25. A method according to Claim 1 **characterised in that** the material to be analysed is of environmental concern and interest.

26. A method according to any of the preceding claims in which mineralisation of the sample is carried out by pyrohydrolysis in a furnace having two zones, a first zone in which pyrohydrolysis takes place and a second zone in which oxidation takes place.

27. A method according to Claim 26 in which said first zone is maintained at a substantially constant temperature and the second zone is temperature programmed.

28. A method according to any of the preceding claims in which the sample contains iodine, and a catalyst is used during mineralisation to aid conversion of iodine to hydrogen iodide.

29. A method according to Claim 28 in which the catalyst is a metal oxide.

30. A method according to Claim 29 in which the catalyst is vanadium pentoxide.

31. A method according to any of the preceding claims in which an oxidation catalyst is present in step (ii) to aid conversion of any carbon monoxide and/or volatile organic compounds to carbon dioxide.

32. A method according to Claim 31 in which the oxidation catalyst is platinum or alumina.

33. A method according to any of the preceding claims in which the carrier is a quaternary alkyl ammonium iodide.

34. A method according to Claim 33 in which the carrier is tetra-butyl ammonium iodide.

## Patentansprüche

1. Verfahren zur Bestimmung eines Analyts, bestehend aus einem spezifizierten Radionuklid, welches die folgenden Schritte umfasst:
(i) Hinzugeben eines kombinierten Trägers und Tracers zu einer zu analysierenden Probe;
(ii) Mineralisieren der Probe mit dem hinzugefügten kombinierten Träger und Tracer;
(iii) Isolieren des Analyts aus dem Produkt des genannten Mineralisierens; und
(iv) Bestimmung des Analyts,
**dadurch gekennzeichnet, dass** Schritt (ii) die Pyrolyse und/oder Pyrohydrolyse der Probe umfasst.

2. Verfahren gemäß Anspruch 1, **dadurch gekennzeichnet, dass** Schritt (ii) die Pyrohydrolyse der Probe umfasst.

3. Verfahren gemäß Anspruch 1 oder 2, **dadurch gekennzeichnet, dass** Schritt (ii) im Anschluss an das Mineralisieren der Probe die Absorption und/oder Adsorption von freigesetzten Gasen und Dämpfen auf oder in einem Substrat einschließt.

4. Verfahren gemäß Anspruch 1, 2 oder 3, **dadurch gekennzeichnet, dass** Schritt (iii) einen weiteren Schritt der Reinigung des Analyts einschließt.

5. Verfahren gemäß irgendeinem der Ansprüche 1 bis 4, **dadurch gekennzeichnet, dass** Schritt (iv) weiterhin umfasst, entweder:
(i) Bestimmung des interessierenden Analyts mittels klassischer radiometrischer Techniken oder
(ii) Bestimmung des interessierenden Analyts mittels anorganischer Massenspektrometrie.

6. Verfahren gemäß irgendeinem vorangehenden Anspruch, **dadurch gekennzeichnet, dass** der Analyt ausgewählt ist aus einem oder mehreren aus C-14, 1-129, Cl-36, Tc-99, S-35 und Ru-106.

7. Verfahren gemäß Anspruch 5, **dadurch gekennzeichnet, dass** Schritt (iv) die Bestimmung des interessierenden Analyts mittels anorganischer Massenspektrometrie umfasst.

8. Verfahren gemäß Anspruch 7, **dadurch gekennzeichnet, dass** die anorganische Massenspektrometrie induktiv gekoppelte Plasma-Massenspektrometrie ist.

9. Verfahren gemäß Anspruch 8, **dadurch gekennzeichnet, dass** der Analyt I-129 oder Tc-99 ist.

10. Verfahren gemäß Anspruch 7, **dadurch gekennzeichnet, dass** die anorganische Massenspektrometrie Beschleuniger-Massenspektrometrie ist.

11. Verfahren gemäß Anspruch 10, **dadurch gekennzeichnet, dass** der Analyt I-129, C-14, Tc-99 oder Cl-36 ist.

12. Verfahren gemäß Anspruch 5, **dadurch gekennzeichnet, dass** Schritt (iv) die Bestimmung des interessierenden Analyts mittels klassischer radiometrischer Techniken umfasst.

13. Verfahren gemäß Anspruch 12, **dadurch gekennzeichnet, dass** der Analyt I-129, C-14, Tc-99, S-35, Ru-106 oder Cl-36 ist.

14. Verfahren gemäß Anspruch 2 oder 3, **dadurch gekennzeichnet, dass** die Pyrohydrolyse angepasst ist, um alle chemischen und physikalischen Formen des Analyts in lösliche anorganische Formen des Analyts zu überführen.

15. Verfahren gemäß Anspruch 2 oder 3, **dadurch gekennzeichnet, dass** die Analyse auf Pyrohydrolyse von sowohl C-14 als auch I-129 in einem einzigen Proben-Aliquot basiert.

16. Verfahren gemäß Anspruch 2, **dadurch gekennzeichnet, dass** Schritt (ii) eine ferngesteuerte Pyrohydrolyse der Probe in einer stark abgeschirmten Anlage umfasst.

17. Verfahren gemäß Anspruch 16, **dadurch gekennzeichnet, dass** die Bestimmung zusätzlich eine zusätzliche Probenaufbereitung in der stark abgeschirmten Anlage umfasst, um das Ausführen zu einem Strahlenschutzarbeitsplatz zu gestatten.

18. Verfahren gemäß Anspruch 16, **dadurch gekennzeichnet, dass** weiteres Reinigen der Probe und Aufbereiten der Quelle an einem Strahlenschutsarbeitsplatz durchgeführt wird.

19. Verfahren gemäß Anspruch 2, **dadurch gekennzeichnet, dass** die Bestimmung von I-129 und C-14 eine hohe Verdünnung der Probe in einer stark abgeschirmten Anlage umfasst.

20. Verfahren gemäß Anspruch 19, **dadurch gekennzeichnet, dass** das Verdünnen unter Verwendung von Isotopenverdünnungsmethodologie kalibriert wird.

21. Verfahren gemäß Anspruch 19, worin der Schritt des Isolierens des Analyts einen weiteren Schritt des Reinigens des Analyts einschließt und der genannte Isolier- und Reinigungsschritt anschließend auch den Schritt des Aufbereitens einer Quelle für die Messung des Analyts umfasst, **dadurch gekennzeichnet, dass** Pyrohydrolyse, Reinigen der Probe und Aufbereiten der Quelle in einer Umgebung mit vergleichsweise niedriger Schutzstufe durchgeführt werden.

22. Verfahren gemäß Anspruch 2, **dadurch gekennzeichnet, dass** die Bestimmung auf einem Hybrid-Ansatz basiert, welcher eine ferngesteuerte Pyrohydrolyse und ein kalibriertes Verdünnen in einer stark abgeschirmten Anlage und nachfolgendes Reinigen der Probe und Aufbereiten der Quelle in einer Umgebung mit vergleichsweise niedriger Schutzstufe durchgeführt werden.

23. Verfahren gemäß Anspruch 1, **dadurch gekennzeichnet, dass** das zu analysierende Material auf Prozess-Strömen oder Materialien, Prozess-Abfällen und Formen von Abfall, die im Kernbrennstoff-Kreislauf von Interesse sind, basiert.

24. Verfahren gemäß Anspruch 23, **dadurch gekennzeichnet, dass** das Material von hoch-radioaktivem bis im Wesentlichen nicht radioaktiven Material reichen kann.

25. Verfahren gemäß Anspruch 1, **dadurch gekennzeichnet, dass** das zu analysierende Material in Bezug auf die Umwelt von Belang und Interesse ist.

26. Verfahren gemäß irgendeinem der vorangehenden Ansprüche, in welchem das Mineralisieren der Probe mittels Pyrohydrolyse in einem Ofen durchgeführt wird, der zwei Zonen besitzt, eine erste Zone, in welcher die Pyrohydrolyse stattfindet, und einer zweiten Zone, in welcher Oxidation stattfindet.

27. Verfahren gemäß Anspruch 26, in welchem die genannte erste Zone auf einer im Wesentlichen konstanten Temperatur gehalten wird und die zweite Zone temperaturprogrammiert ist.

28. Verfahren gemäß irgendeinem der vorangehenden Ansprüche, in welchem die Probe Iod enthält und während des Mineralisierens ein Katalysator verwendet wird, um die Umsetzung von Iod in Iodwasserstoff zu unterstützen.

29. Verfahren gemäß. Anspruch 28, in welchem der Katalysator ein Metalloxid ist.

30. Verfahren gemäß Anspruch 29, in welchem der Katalysator Vanadiumpentoxid ist.

31. Verfahren gemäß irgendeinem der vorangehenden Ansprüche, in welchem ein Oxidationskatalysator in Schritt (ii) anwesend ist, um die Umsetzung jeglichen Kohlenmonoxids und/oder jeglicher organischer Verbindungen zu Kohlendioxid zu unterstützen.

32. Verfahren gemäß Anspruch 31, in welchem der Oxidationskatalysator Platin oder Aluminiumoxid ist.

33. Verfahren gemäß irgendeinem der vorangehenden Ansprüche, in welchem der Träger ein quartäres Alkylammoniumiodid ist.

34. Verfahren gemäß Anspruch 33, in welchem der Träger Tetrabutylammoniumiodid ist.

## Revendications

1. Procédé de détermination d'un analyte consistant en un radionucléide spécifié, qui comprend les étapes :
(i) d'addition d'un support et d'un traceur combinés à un échantillon devant être analysé ;
(ii) de minéralisation de l'échantillon avec les support et traceur combinés ajoutés ;
(iii) d'isolement de l'analyte à partir du résultat de ladite minéralisation ; et
(iv) de détermination de l'analyte,
**caractérisé par le fait que** l'étape (ii) comprend la pyrolyse et/ou la pyrohydrolyse de l'échantillon.

2. Procédé selon la revendication 1, **caractérisé par le fait que** l'étape (ii) comprend la pyrohydrolyse de l'échantillon.

3. Procédé selon l'une des revendications 1 ou 2, **caractérisé par le fait que** l'étape (ii) comprend, après la minéralisation de l'échantillon, l'absorption et/ou l'adsorption de gaz et vapeurs dégagés sur ou dans un substrat.

4. Procédé selon l'une des revendications 1, 2 ou 3, **caractérisé par le fait que** l'étape (iii) comprend une nouvelle étape de purification de l'analyte.

5. Procédé selon l'une quelconque des revendications 1 à 4, **caractérisé par le fait que** l'étape (iv) comprend soit :
(i) la détermination d'analytes d'intérêt par des techniques radiométriques classiques, soit
(ii) la détermination d'analytes d'intérêt par spectrométrie de masse inorganique.

6. Procédé selon l'une quelconque des revendications précédentes, **caractérisé par le fait que** l'analyte est choisi parmi un ou plusieurs de C-14, 1-129, Cl-36, Tc-99, S-35 et Ru-106.

7. Procédé selon la revendication 5, **caractérisé par le fait que** l'étape (iv) comprend la détermination d'analytes d'intérêt par spectrométrie de masse inorganique.

8. Procédé selon la revendication 7, **caractérisé par le fait que** la spectrométrie de masse inorganique est couplée de manière inductive à une spectrométrie de masse à plasma.

9. Procédé selon la revendication 8, **caractérisé par le fait que** l'analyte est 1-129 ou Tc-99.

10. Procédé selon la revendication 7, **caractérisé par le fait que** la spectrométrie de masse inorganique est une spectrométrie de masse par accélérateur.

11. Procédé selon la revendication 10, **caractérisé par le fait que** l'analyte est I-129, C-14, Tc-99 ou Cl-36.

12. Procédé selon la revendication 5, **caractérisé par le fait que** l'étape (iv) comprend la détermination d'analytes d'intérêt par des techniques radiométriques classiques.

13. Procédé selon la revendication 12, **caractérisé par le fait que** l'analyte est 1-129, C-14, Tc-99, S-35, Ru-106 ou Cl-36.

14. Procédé selon l'une des revendications 2 ou 3, **caractérisé par le fait que** la pyrohydrolyse est apte à convertir toutes les formes physiques et chimiques de l'analyte en des formes inorganiques, solubles.

15. Procédé selon l'une des revendications 2 ou 3, **caractérisé par le fait que** l'analyse est basée sur la pyrohydrolyse à la fois de C-14 et 1-129 dans une partie aliquote d'échantillon unique.

16. Procédé selon la revendication 2, **caractérisé par** le fait l'étape (ii) comprend une pyrohydrolyse à distance de l'échantillon dans une installation lourdement blindée.

17. Procédé selon la revendication 16, **caractérisé par le fait que** la détermination comprend de plus un traitement d'échantillon supplémentaire dans l'installation lourdement blindée pour permettre un transfert à un banc radio.

18. Procédé selon la revendication 16, **caractérisé par le fait que** de nouvelles purification de l'échantillon et préparation de la source sont effectuées sur le banc radio.

19. Procédé selon la revendication 2, **caractérisé par le fait que** la détermination de 1-129 et C-14 comprend une dilution importante de l'échantillon dans une installation lourdement blindée.

20. Procédé selon la revendication 19, **caractérisé par le fait que** la dilution est étalonnée à l'aide de méthodologies de dilution isotopique.

21. Procédé selon la revendication 19, dans lequel l'étape d'isolement de l'analyte comprend une nouvelle étape de purification de l'analyte, et ladite étape d'isolement et de purification comprend également par la suite l'étape de préparation d'une source pour la mesure de l'analyte, **caractérisé par le fait que** la pyrohydrolyse, la purification d'échantillon et la préparation de source sont effectuées dans un environnement de protection à relativement bas niveau de protection.

22. Procédé selon la revendication 2, **caractérisé par le fait que** la détermination est basée sur une approche hybride comprenant une pyrohydrolyse à distance et une dilution étalonnée dans une installation lourdement blindée et des purification d'échantillon et préparation de source ultérieures dans un environnement à relativement bas niveau de protection.

23. Procédé selon la revendication 1, **caractérisé par le fait que** la matière devant être analysée est à base de courants ou matières de procédé, de déchets de procédé et de formes de déchets d'intérêt dans le cycle du combustible nucléaire.

24. Procédé selon la revendication 23, **caractérisé par le fait que** la matière peut se situer dans une plage allant de hautement radioactive à sensiblement non-radioactive.

25. Procédé selon la revendication 1, **caractérisé par le fait que** la matière devant être analysée est de préoccupation et d'intérêt d'ordre environnemental.

26. Procédé selon l'une quelconque des revendications précédentes, dans lequel une minéralisation de l'échantillon est réalisée par pyrohydrolyse dans un four ayant deux zones, une première zone dans laquelle une pyrohydrolyse a lieu et une seconde zone dans laquelle une oxydation a lieu.

27. Procédé selon la revendication 26, dans lequel ladite première zone est maintenue à une température sensiblement constante et la seconde zone est programmée en température.

28. Procédé selon l'une quelconque des revendications, dans lequel l'échantillon contient de l'iode, et un catalyseur est utilisé durant la minéralisation pour aider la conversion de l'iode en iodure d'hydrogène.

29. Procédé selon la revendication 28, dans lequel le catalyseur est un oxyde métallique.

30. Procédé selon la revendication 29, dans lequel le catalyseur est le pentoxyde de vanadium.

31. Procédé selon l'une quelconque des revendications précédentes, dans lequel un catalyseur d'oxydation est présent à l'étape (ii) pour aider la conversion de tout monoxyde de carbone et/ou de tous composés organiques volatils en dioxyde de carbone.

32. Procédé selon la revendication 31, dans lequel le catalyseur d'oxydation est le platine ou l'alumine.

33. Procédé selon l'une quelconque des revendications précédentes, dans lequel le support est un iodure d'alkyl ammonium quaternaire.

34. Procédé selon la revendication 33, dans lequel le support est l'iodure de tétrabutyl ammonium.
